# EUROPÄISCHE PATENTSCHRIFT

(11) **EP 1 342 587 B1**
(45) Veröffentlichungstag und Bekanntmachung des Hinweises auf die Patenterteilung: **02.02.2005**
(21) Anmeldenummer: 03002856.7
(22) Anmeldetag: 08.02.2003
(51) Int. Cl.: B43K 19/00, B43K 19/16, B27K 3/15, C09D 129/00, C09D 129/14, C08L 29/00, C08L 29/14

(54) **Holzgefasster, mit einer Beschichtung versehener Stift und Verfahren zum Aufbringen dieser Beschichtung**
Wooden pencil with a coating and method for applying said coating
Crayon a gaine de bois avec revêtement et procédé d'application dudit revêtement

(30) Priorität: 08.03.2002 DE 10210375
(43) Veröffentlichungstag der Anmeldung: 10.09.2003
(73) Patentinhaber: Faber- Castell AG, 90546 Stein (DE)
(72) Erfinder: Beck, Udo, 90461 Nürnberg (DE); Appel, Reiner, 90522 Oberasbach (DE)
(74) Vertreter: Mörtel & Höfner

(56) Entgegenhaltungen:
- DD-A- 251 562
- DE-A- 3 036 451
- DE-A- 4 235 151
- DE-A- 10 003 792
- DE-A- 19 754 084
- J. W. KNAPCZYK: "Poly(vinyl butyral)" KIRK-OTHMER ENCYCLOPEDIA OF CHEMICAL TECHNOLOGY (ELECTRONIC EDITION), 4. Dezember 2000 (2000-12-04), XP002244237
- "Application areas for PIOLOFORM B polyvinyl butyral" WACKER CHEMIE HOMEPAGE, [Online] XP002244238 Gefunden im Internet: <URL:www.wacker.com/internet/webcache/de_D E/PTM/FunctPolymers/ PVB/PT_Pol_Polbut_Pioloform_Application_ar eas.pdf> [gefunden am 2003-06-12]
- "Mowital applications" KURARAY HOMEPAGE, [Online] XP002244239 Gefunden im Internet: <URL:http://www.kuraray-kse.com/MowitalTab -N.pdf> [gefunden am 2003-06-12]

## Beschreibung

Die Erfindung betrifft einen mit einer Beschichtung versehenen holzgefassten Stift und ein Verfahren zum Aufbringen der Beschichtung.

Das Lackieren oder Beschichten von holzgefassten Blei-, Buntoder Kosmetikstiften dient sowohl dem Schutz des Stiftes, als auch dekorativen Zwecken und geschieht herkömmlicherweise unter Verwendung von Lacken auf Lösemittelbasis oder mit wässrigen Bindemitteldispersionen. Erstere haben den Nachteil, daß bei der Trocknung Lösemittel verdunsten, was eine erhebliche gesundheitliche Belastung für die damit hantierenden Beschäftigten darstellt. Die Lösungsmittel müssen daher technisch aufwändig aus der Umgebungsluft gefiltert werden. Lackbeschichtungen auf Basis wässriger Polymerdispersionen sind zwar deutlich umweltfreundlicher, haben aber den Nachteil, daß sie nur relativ langsam, oder bei höheren Temperaturen getrocknet werden müssen, was eines erhöhten Energie- bzw. Zeitaufwandes bedarf.

Lacke auf Wasser- oder Lösemittelbasis haben weiterhin den Nachteil, daß mit ihnen bei der Lackierung holzgefasster Stifte bis zu zehn aufeinander folgende Lackierdurchgänge benötigt werden, um qualitativ hochwertige und visuell einwandfreie Beschichtungen zu erhalten. Dies liegt unter anderem daran, dass diese Lacke teilweise über 50% an flüchtigen Bestandteilen (Lösemittel oder Wasser) enthalten, die folglich nicht zum Schichtaufbau auf der Holzoberfläche beitragen.

Bei Verwendung thermoplastischer Beschichtungsmassen treten diese Probleme nicht auf. So ist aus der DE-PS 30 36 451 ein Verfahren zur Beschichtung von Holzstiften mittels eines heißschmelzbaren Polyesters bekannt. Diese Beschichtung hat jedoch den Nachteil, daß sie keinen Glanz aufweist und deshalb mit einem herkömmlichen Lösemittellack überlackiert werden muss. Außerdem weisen Polyester nicht die für Stiftoberflächen geforderte Kratzfestigkeit auf.

Aus der Offenlegungsschrift DE 197 54 084 A 1 ist eine Kunststoffdeckschicht für Stifte und Minen bekannt. Dabei kommt entweder Polyethylen oder PVC zum Einsatz.

In der Offenlegungsschrift DE 100 03 792 A 1 ist eine Beschichtungsmasse auf Basis thermoplastischer Polyamidharze beschrieben. Zur Verbesserung der Haftung des Polyamids auf Holz wird ein Zusatz von Maleinsäureanhydrid vorgeschlagen.

Aufgabe der vorliegenden Erfindung ist es, einen Stift mit einer alternativen thermoplastischen Beschichtung und ein zum Aufbringen der Beschichtung geeignetes Verfahren vorzuschlagen.

Diese Aufgabe wird nach Anspruch 1 bzw. Anspruch 12 dadurch gelöst, dass die Beschichtungsmasse aus einer thermoplastisch erweichbaren, 40 bis 100 % Polyvinylbutyral-Polymer, 0 bis 60 Gew.% Haftvermittler, 0 bis 10 Gew.% Farbmittel, 0 bis 50 Gew.% Füllstoffe und 0 bis 20 Gew.% Additive enthaltenden Beschichtungsmasse gebildet ist, die im schmelzflüssigen Zustand aufgebracht ist bzw. wird.

Im Gegensatz von in Form von Dispersionen oder Lösungen aufgebrachten Beschichtungen ergeben sich bereits bei Verwendung einer nur aus Polyvinylbutyral-Polymer (im folgenden mit PVB bezeichnet) bestehenden Beschichtungsmasse bei nur einmaligen Auftrag auf Holz- bzw. Stiftoberflächen thermoplastische Filme, die trotz einer nur geringen Dicke im Holz vorhandene Poren und Unebenheiten füllen und somit glatte und qualitativ hochwertige Oberflächen ergeben. Neben Holzoberflächen hat sich in Versuchen auch eine Eignung des Materials zur Beschichtung von sogenannten Holzwerkstoffen gezeigt. Diese bestehen in der Regel aus einem oder mehreren Polymeren und organischen Fasern wie Holzmehl oder Cellulosefasern als Füllstoffen. Die erfindungsgemäßen Beschichtungsmassen sind im Falle von holzgefassten Stiften als Span abspitzbar und ergeben kratzfeste und bedruckbare Oberflächen. Sie lassen sich in einem Arbeitsgang im Tauch- oder im Falle von holzgefassten Stiften im sog. Durchstoßverfahren als schnell erstarrende Schmelze aufbringen. Gesundheitsschädliche oder ätzende Substanzen werden dabei nicht freigesetzt. PVB lässt sich mit einer Vielzahl unterschiedlicher Stoffe vermengen, wodurch sich die Eigenschaften eines damit hergestellten Überzuges in weiten Bereichen variieren lassen: So ist bei einer bevorzugten Variante ein Haftvermittler enthalten, mit dem sich die Haftung der Beschichtung an unterschiedlichen Oberflächen einstellen lässt. Als besonders geeignet haben sich Haftvermittler in Form von Harzen oder Ölen auf der Basis von Polyacrylaten, Polyurethanen, Polyvinylacetaten, Keton-Aldehydharzen, Sucrosederivaten und Polyesterharzen herausgestellt. Denkbar ist auch der Einsatz von Hotmelts.

Die Rahmenrezeptur sieht 40 bis 100 Gew.% PVB, 0 bis 60 Gew.% Haftvermittler, 0 bis 10 Gew.% Farbmittel; 0 bis 50 Gew.% Füllstoffe und 0 bis 20 Gew.% Additive vor. Überraschenderweise hat sich gezeigt, dass mit einem Wachszusatz die zumeist matte Oberfläche der Beschichtung besonders glänzend wird. Unter Wachs sind dabei pflanzliche, tierische und mineralische Wachse, Fettsäurederivate, Polyolefinwachse, oxidierte Polyethylenwachse, Montanwachse und dgl. zu verstehen. Besonders geeignet ist hydriertes Rizinusöl. Als Füllstoffe finden anorganische und organische Stoffe wie Kaolin, Talkum, Kreide, Bariumsulfat, Cellulosefasern und Polyolefine Verwendung. Mit Weichmachern kann die Flexibilität und Sprödigkeit der Beschichtung gezielt beeinflusst werden. Besonders geeignet sind Weichmacher auf Basis Adipinsäure oder anderer organischer Säuren, sowie deren Polyester.

Als Farbmittel können alle bekannten organischen und anorganischen Pigmente eingesetzt werden, wobei diese sowohl als Pulver, als auch als fein dispergierte Pigmentpräparation in einem geeigneten Medium vorliegen können.

Im folgenden werden einige Beispiele für die Beschichtung von holzgefassten Stiften beschrieben:

### Beispiel 1:

| | |
|---|---|
| Mowital B45 H | 75 Gew.% |
| Sucroseacetat-i-Butyrat (SAIB) | 20 Gew.% |
| Stearinsäure | 5 Gew.% |

Polyvinylbutyral ist allgemein in unterschiedlichen Acetalisierungsgraden und Molmassenverteilungen erhältlich. Für das Ausführungsbeispiel 1 wird eine unter dem Handelsnamen "Mowital B45 H" von der Clariant GmbH & Co OHG vertriebene Variante verwendet. Diese und die weiter unten beschriebenen Varianten weisen einen Erweichungsbereich von 120 bis 180 °C auf. Als Haftvermittler wird Sucroseacetat-i-Butyrat (Eastman Chemical Comp., USA) eingesetzt. Diese Stoffe werden zusammen mit Stearinsäure in einem Schnellmischer oder einem Kneter vermischt. Eine Vermengung der Ausgangsstoffe ist auch in einem Extruder mit anschließender Granulierung möglich. Die extrudierte Masse kann aber auch direkt in einen beheizten Behälter geleitet werden.

Als Lackierbehälter haben sich die in der Bleistiftindustrie gebräuchlichen als besonders geeignet erwiesen, wobei zusätzlich Heizelemente zum Aufschmelzen der Beschichtungsmasse notwendig sind. In der relativ niedrig viskosen Schmelze sollten, je nach gewähltem Polymertyp vorzugsweise Temperaturen zwischen 140°C und 220°C vorliegen. Die Stifte treten dabei Stirnseite an Stirnseite in einen Behälter ein, welcher auf der Eintritts- und Austrittsseite mit einem Filz- oder Gummiabstreifer abgedichtet ist. Der Stift wird durch die aufgeschmolzene Beschichtungsmasse geschoben und damit beschichtet. Beim Verlassen des Behälters wird durch den genannten Abstreifer überschüssige Beschichtungsmasse abgestreift. Die Dicke der Beschichtung kann über die Anpresskraft des Abstreifers auf die gewünschte Stärke eingestellt werden und beträgt etwa zwischen 50 und 200 µm.

Auf die geschilderte Weise wird ein holzgefasster Stift mit einer hochglänzenden klaren Beschichtung erhalten.

### Beispiel 2:

| | |
|---|---|
| Mowital B30 HH | 45-93% |
| Keton-Formaldehyd-Harz | 5-30% |
| Wachs | 1-15% |
| rotes Farbpigment | 1-10% |

Mowital B30 HH ist eine weitere, von Clariant erhältliche PVB-Variante.

Als Haftvermittler wird ein Keton-Formaldehydharz (beispielsweise Kunstharz SK von der Degussa-Hüls AG) verwendet. Das Wachs ist ein z.B. von der Croda GmbH unter dem Handelsnamen _{"}Crodamide EBO" erhältliches Ethylen-bis-oleamid. Als Farbpigment wird Renol Rot FT3ADB-F5R (Clariant Masterbatch GmbH & Co) eingesetzt. Die Verarbeitung der Ausangsstoffe und der Schmelzeauftrag erfolgen entsprechend Beispiel 2. Es wird ein Stift mit roter, hochglänzender Oberfläche erhalten.

### Beispiel 3:

| | |
|---|---|
| Mowital B30 T | 60% |
| Polyvinylacetat | 18% |
| Talkum | 20% |
| Farbpigment | 2% |

Die Verarbeitung der hier verwendeten PVB- Variante Mowital B30 T und der weiteren Inhaltsstoffe sowie der Auftrag auf eine Stiftoberfläche erfolgen entsprechend Beispiel 1. Das in Pulverform verwendete Polyvinylacetat ist von der Harco Harlow Chemical Co. Ltd., GB unter der Bezeichnung _{"}Mowilith 20" erhältlich. Als Farbpigment wird TiO2 (Tronox A-1, Bayer AG) und als Füllstoff Talkum (Westmin Talc 8E, MK-Chemicals GmbH) beigemengt. Es wird ein Stift mit weißer, seidenmatter Oberfläche erhalten.

## Patentansprüche

1. Holzgefasster, mit einer Beschichtung versehener Stift
**dadurch gekennzeichnet,**
**dass** die Beschichtung aus einer thermoplastisch erweichbaren, im schmelzflüssigen Zustand aufgebrachten Beschichtungsmasse gebildet ist, die 40 bis 100 Gew.% Polyvinylbutyral-Polymer, 0 bis 60 Gew. % Haftvermittler, 0 bis 10 Gew. % Farbmittel, 0 bis 50 Gew.% Füllstoffe und 0 bis 20 Gew.% Additive enthält.

2. Stift nach Anspruch 1,
**dadurch gekennzeichnet,**
**dass** die Beschichtungsmasse einen Haftvermittler enthält.

3. Stift nach Anspruch 2,
**dadurch gekennzeichnet,**
**dass** in der Beschichtungsmasse ein Haftvermittler aus der Gruppe der Polyacrylate, Polyurethane, Polyvinylacetate, Keton-Aldehydharze, Sucrosederivate und Polyesterharze enthalten ist.

4. Stift nach Anspruch 3,
**dadurch gekennzeichnet,**
**dass** in der Beschichtungsmasse ein Wachs als Additiv enthalten ist.

5. Stift nach Anspruch 4,
**gekennzeichnet durch**
eine Beschichtungsmasse folgender Zusammensetzung:
| | |
|---|---|
| Polyvinylbutyral-Polymer | 50-89 Gew.% |
| Sucroseacetat-i-Butyrat (SAIB) | 10-49 Gew.% |
| Wachs | 1-10 Gew.% |

6. Stift nach Anspruch 5,
**dadurch gekennzeichnet,**
**dass** in der Beschichtungsmasse Stearinsäure als Wachs enthalten ist.

7. Stift nach Anspruch 4,
**gekennzeichnet durch**
eine Beschichtungsmasse folgender Zusammensetzung:
| | |
|---|---|
| Polyvinylbutyral-Polymer | 45-93% |
| Keton-Formaldehyd-Harz | 5-30% |
| Wachs | 1-15% |
| Farbpigment | 1-10% |

8. Stift nach Anspruch 7,
**dadurch gekennzeichnet,**
**dass** als Wachs Ethylen-bis-oleamid enthalten ist.

9. Stift nach Anspruch 3,
**gekennzeichnet durch**
eine Beschichtungsmasse folgender Zusammensetzung:
| | |
|---|---|
| Polyvinylbutyral-Polymer | 50-87% |
| Polyvinylacetat | 5-30% |
| Talkum | 5-30% |
| Farbpigment | 1-15% |

10. Stift nach einem der Ansprüche 3 bis 9,
**dadurch gekennzeichnet,.**
**dass** in der Beschichtungsmasse ein Weichmacher enthalten ist.

11. Stift nach einem der Ansprüche 1 bis 10,
**gekennzeichnet durch**
eine Beschichtung mit einer Dicke von 50µm bis 200 µm.

12. Verfahren zur Beschichtung eines holzgefassten Stiftes,
**dadurch gekennzeichnet**,
dasseine thermoplastisch erweichbare Beschichtungsmasse nach einem der Ansprüche 1 bis 11 in schmelzflüssigem Zustand auf die Holzoberfläche des Stiftes aufgebracht wird.

13. Verfahren nach Anspruch 12,
**dadurch gekennzeichnet,**
**dass** der Stift durch einen mit schmelzflüssiger Beschichtungsmasse gefüllten Behälter hindurch geschoben und dabei seine Holzoberfläche mit Beschichtungsmasse überzogen wird.

14. Verfahren nach Anspruch 13,
**dadurch gekennzeichnet,**
**dass** bei einem aus dem Behälter austretenden Stift überschüssige Beschichtungsmasse abgestreift und dadurch die Dicke der Beschichtung auf Werte zwischen 50 und 200 µm eingestellt wird.

## Claims

1. Wooden pencil with a coating,
**characterized in that**
the coating is formed from a thermoplastically softenable coating mass applied in the molten state which comprises 40 to 100% by weight of polyvinylbutyral polymer, 0 to 60% by weight of adhesion promoter, 0 to 10% by weight of colorant, 0 to 50% by weight of fillers and 0 to 20% by weight of additives.

2. Pencil according to Claim 1,
**characterized in that**
the coating mass comprises an adhesion promoter.

3. Pencil according to Claim 2,
**characterized in that**
an adhesion promoter from the group of polyacrylates, polyurethanes, polyvinyl acetates, ketone aldehyde resins, sucrose derivatives and polyester resins is present in the coating mass.

4. Pencil according to Claim 3,
**characterized in that**
a wax is present as additive in the coating mass.

5. Pencil according to Claim 4,
**characterized by**
a coating mass of the following composition:
| | |
|---|---|
| polyvinylbutyral polymer | 50-89% by weight |
| sucrose acetate i-butyrate (SAIB) | 10-49% by weight |
| Wax | 1-10% by weight |

6. Pencil according to Claim 5,
**characterized in that**
stearic acid is present as wax in the coating mass.

7. Pencil according to Claim 4,
**characterized by**
a coating mass of the following composition:
| | |
|---|---|
| polyvinylbutyral polymer | 45-93% |
| ketone formaldehyde resin | 5-30% |
| wax | 1-15% |
| colour pigment | 1-10% |

8. Pencil according to Claim 7,
**characterized in that**
ethylene bis-oleamide is present as wax.

9. Pencil according to Claim 3,
**characterized by**
a coating mass of the following composition:
| | |
|---|---|
| polyvinylbutyral polymer | 50-87% |
| polyvinyl acetate | 5-30% |
| talc | 5-30% |
| colour pigment | 1-15% |

10. Pencil according to one of Claims 3 to 9,
**characterized in that**
a plasticizer is present in the coating mass.

11. Pencil according to one of Claims 1 to 10,
**characterized by**
a coating with a thickness of from 50 µm to 200 µm.

12. Method for coating a wooden pencil,
**characterized in that**
a thermoplastically softenable coating mass according to one of Claims 1 to 11 is applied in the molten state to the wooden surface of the pencil.

13. Method according to Claim 12,
**characterized in that**
the pencil is pushed through a container filled with molten coating mass and its wooden surface is thereby covered with coating mass.

14. Method according to Claim 13,
**characterized in that**
as a pencil emerges from the container, excess coating mass is scraped off, thereby adjusting the thickness of the coating to values between 50 and 200 µm.

## Revendications

1. Crayon à gaine de bois ayant un revêtement,
**caractérisé**
**en ce que** le revêtement est formé d'une composition de revêtement, qui peut se ramollir thermoplastiquement, qui est déposée à l'état fondu et qui contient de 40 à 100% en poids de polyvinylbutyral polymère, de 0 à 60% en poids d'agent adhésif, de 0 à 10% en poids de colorant, de 0 à 50% en poids de charge et de 0 à 20% en poids d'additifs.

2. Crayon suivant la revendication 1,
**caractérisé**
**en ce que** la composition de revêtement contient un adhésif.

3. Crayon suivant la revendication 2,
**caractérisé**
**en ce que** la composition de revêtement contient un adhésif du groupe des polyacrylates, polyuréthanes, poly(acétate de vinyle), résines cétone-aldéhyde, dérivés du saccharose et résines de polyester.

4. Crayon suivant la revendication 3,
**caractérisé**
**en ce qu'**une cire est contenue comme additif dans la composition de revêtement.

5. Crayon suivant la revendication 4,
**caractérisé**
**par** une composition de revêtement ayant la composition suivante :
| | |
|---|---|
| polyvinylbutyral polymère | 50 à 89% en poids |
| acétate-i-butyrate de saccharose (AIBS) | 10 à 49% en poids |
| cire | 1 à 10% en poids |

6. Crayon suivant la revendication 5,
**caractérisé**
**en ce que** de l'acide stéarique est contenu en tant que cire dans la composition de revêtement.

7. Crayon suivant la revendication 4,
**caractérisé**
**par** une composition de revêtement ayant la composition suivante :
| | |
|---|---|
| polyvinylbutyral polymère | 45 à 93% en poids |
| résine cétone-formaldehyde | 5 à 30% en poids |
| cire | 1 à 15% en poids |
| pigment coloré | 1 à 10% en poids |

8. Crayons suivant la revendication 7,
**caractérisé**
**en ce que** de l'éthylène bis oléamide est contenu en tant que cire.

9. Crayon suivant la revendication 3,
**caractérisé**
**par** une composition de revêtement ayant la composition suivante :
| | |
|---|---|
| polyvinylbutyral polymère | 50 à 87% en poids |
| poly(acétate de vinyle) | 5 à 30% en poids |
| talc | 5 à 30% en poids |
| pigment coloré | 1 à 15% en poids |

10. Crayon suivant l'une des revendications 3 à 9,
**caractérisé**
**en ce qu'**un plastifiant est contenu dans la composition de revêtement.

11. Crayon suivant l'une des revendications 1 à 10,
**caractérisé**
**par** un revêtement d'une épaisseur de 50 µm à 200 µm.

12. Procédé de revêtement d'un crayon à gaine de bois,
**caractérisé**
**en ce que** l'on dépose à l'état fondu sur la surface en bois du crayon une composition de revêtement pouvant se ramollir thermoplastiquement suivant l'une des revendications 1 à 11.

13. Procédé suivant la revendication 12,
**caractérisé**
**en ce que** l'on fait passer le crayon dans un récipient empli d'une composition de revêtement à l'état fondu et on enrobe ainsi sa surface en bois de la composition de revêtement.

14. Procédé suivant la revendication 13,
**caractérisé**
**en ce que** lorsque, le crayon sort du récipient on enlève la composition de revêtement en excès et on règle ainsi l'épaisseur du revêtement à des valeurs comprises entre 50 et 200 µm.
